Europäisches Patentamt

European Patent Office

Office européen des brevets

(19)

(11) Veröffentlichungsnummer : **0 039 400**
**B1**

(12) # EUROPÄISCHE PATENTSCHRIFT

(45) Veröffentlichungstag der Patentschrift :
**16.02.83**

(21) Anmeldenummer : **81101876.1**

(22) Anmeldetag : **13.03.81**

(51) Int. Cl.³ : **D 06 M 15/28**, A 01 K 73/02,
**D 06 M 15/00**

(54) **Verfahren zur Ausrüstung von Fischnetzen.**

(30) Priorität : **26.03.80 DE 3011710**

(43) Veröffentlichungstag der Anmeldung :
**11.11.81 Patentblatt 81/45**

(45) Bekanntmachung des Hinweises auf die Patenterteilung : **16.02.83 Patentblatt 83/07**

(84) Benannte Vertragsstaaten :
**BE DE FR GB IT NL SE**

(56) Entgegenhaltungen :
**DE B 1 015 409**
**FR A 1 071 309**
**FR A 2 040 014**
**US A 3 330 689**

(73) Patentinhaber : **BAYER AG**
**Zentralbereich Patente, Marken und Lizenzen**
**D-5090 Leverkusen 1, Bayerwerk (DE)**

(72) Erfinder : **Dornheim, Gotmar**
**Am Neulandkreuz 20**
**D-5653 Leichlingen 1 (DE)**
Erfinder : **Giez, Edmund**
**Ermlandweg 23**
**D-5653 Leichlingen 1 (DE)**

EP 0 039 400 B1

# 0 039 400

## Verfahren zur Ausrüstung von Fischnetzen

Die Erfindung betrifft ein Verfahren zum Ausrüsten stark mechanisch beanspruchter Fischnetze, insbesondere von Fischnetz-Steerten, z. B. sogenannte Codends aus synthetischen Filamentgarnen. Aufgrund der erfindungsgemäßen Ausrüstung wird das Crimpen der Netzmaschen weithin verhindert.

Unter Crimpen wird das Schrumpfen bzw. Einkürzen der gezwirnten, geflochtenen oder gewirkten Maschenschenkel verstanden. Das Einkürzen der Maschen hat im allgemeinen zwei Ursachen, nämlich den materialeigenen Schrumpf und denjenigen, der durch Aufrauhung des Maschenschenkels, z. B. aufgrund von Schlaufenbildung der Einzelfilamente, entsteht. Die durch die Einkürzung der Maschenschenkel verkleinerten Netzmaschen verstoßen gegen die Vorschriften der Nordatlantischen Fischerei Kommissionen (NEAFC und ICNAF), die Mindestmaschengrößen zur Vermeidung der Überfischung vorgeschrieben haben. Netze, bei denen das Einkürzen durch Crimpen bereits dadurch berücksichtigt wird, indem man sie mit größeren Maschen ausstattet, werden von den Fischern nicht akzeptiert, weil daraus Fangverluste resultieren. Das Crimpen ist darüber hinaus auch eine Schädigung des Fischnetzes und führt zu dessen vorzeitigem Verschleiß.

Fischnetze werden entweder durch Verknüpfen von gezwirnten oder geflochtenen synthetischen Filamentgarnen oder durch Wirken von synthetischen Filamentgarnen (knotenlose Netze) hergestellt. Dem Netzknüpfen folgt ein sog. Fixierprozeß. Durch das Fixieren oder Thermofixieren, z. B. in Heißluft, siedendem Wasser, Sattdampf oder heißem Öl, wird dem Netzmaterial je nach Art des Fixiermediums und der Bedingungen, ein großer Teil des vorher besessenen Schrumpfes genommen und im Netz wird gleichzeitig der Knotensitz verbessert. Feine bis mittlere Fischnetze werden verschiedentlich mit einem Knotenfixiermittel ausgerüstet. Dabei handelt es sich um versteifende und verklebende Appreturen, z. B. Kieselsäure-Lösungen, Polyvinylchlorid, Polyvinalkohol, Polyvinylester oder Chlorkautschuk (DE-B 1 015 409), die den Knotensitz verbessern sollen. Der Auftrag erfolgt entweder durch Besprühen oder durch Tauchen mit daran anschließendem Trocknungsvorgang.

Bei Fischnetz-Steerten aus grobem, starkem Netztuch, welche später im praktischen Gebrauch enormen mechanischen Scheuerbeanspruchen, z. B. durch das Schleifen über den Grund, ausgesetzt werden, hilft man sich bisher damit, diese Netztücher nach dem Recken und/oder Thermofixieren mit Bitumen, Polyvinylchlorid oder Latex zu beschichten. Der Nachteil derartiger Nachbehandlungen ist jedoch der, daß die Beschichtungen den Beginn des Crimpens nur kurze Zeit herauszögern können. Sobald die äußere Beschichtung des Maschenschenkels abgerieben ist, setzt das Crimpen und damit die Einkürzung der Maschenschenkel als Folge der freiliegenden Einzelfilamente des Zwirns bzw. der Flechtschnur ein.

Als Materialien für Fischnetze werden im allgemeinen Polyamid-, Polyäthylen-, Polypropylen- oder Polyester-Filamentgarne oder Mischungen aus diesen Materialien verwendet, vorzugsweise jedoch Polyamid-Filamentgarne.

Aufgabe der Erfindung war es, für Fischnetztücher aus diesen Materialien, insbesondere für Netzsteerte u. a., zur Vermeidung des Maschencrimpens eine Ausrüstungsverfahren zu finden, das sowohl für unfixiertes wie auch für fixiertes Netzmaterial in Betracht kommt, da nicht alle Netzhersteller die Netze einer Thermofixierung unterwerden. Abgesehen davon fixiert beinahe jeder Netzhersteller auf eine andere Art und demzufolge erzielt jeder auch einen unterschiedlichen Fixiereffekt.

Es wurde nun gefunden, daß sich das Crimpen weitgehend verhindern läßt, wenn man die Netztücher mit einer Ausrüstung imprägniert, die aus einer Mischung aus einem Vinylpyridin-Copolymerisat-Latex, einem Formaldehyd-Harz-Vorkondensat, Formaldehyd, Wasser und gegebenenfalls Farbstoff besteht, die imprägnierten Netztücher trocknet und anschließend einer Wärmebehandlung bei 130-180 °C unterwirft. Bei Netztüchern, die bereits thermofixiert wurden, wird die Ausrüstung nach der Thermofixierung aufgebracht. Das Aufbringen der Latex/Harz-Mischung kann durch Tauchen, Pflatschen oder Sprühen vorgenommen werden. Die Ausrüstung penetriert in die Schnüre bzw. Zwirne der Netze und bewirkt dort nach der Kondensation, daß jede Kapillare in der einmal eingenommenen Position verbleibt, wodurch Schnur-bzw. Zwirneinkürzungen sowie das Eindringen von Sand verhindert werden.

Vinylpyridin-Latex/Harz-Mischungen sind an sich aus US-A-3 330 689 als Bindemittel für Fasern, die mit einem Kautschuk zusammen zu einem Laminat verarbeitet werden, bekannt. Sie müssen dort mit einem Wachs versehen werden, um gegen Oxidation geschützt zu sein.

Unter Formaldehyd-Harz-Vorkondensate werden beispielsweise lösliche Vorkondensate aus Harnstoffen, Melaminen und Phenolen mit Formaldehyd verstanden, vorzugsweise wird ein vorkondensierter Resorcin-Formaldehydharz verwendet.

Als Comonomere des Vinylpyridin-Copolymerisat-Latex kommen vor allem Butadien und Styrol infrage. Die Mischung Latex/Harz läßt sich dabei so einstellen, daß sich keine nachteiligen Netzverhärtungen ergeben.

Der erforderliche Trockensubstanz-Auftrag soll zwischen 5 und 20 Gew.-%, vorzugsweise 12 bis 15 Gew.-%, bezogen auf das Gewicht des trocknen, nicht ausgerüsteten Netztuches, betragen.

Das Eindringen der Ausrüstung in die Filamentgarne und die Trockensubstanz-Auftragsmengen sind durch Regulierung des Trockengehaltes der Imprägnierflotte auf die nicht immer gleichmäßig vorbereiteten Rohmaterialien einstellbar. Unerwünschten Griffverhärtungen, die bei erhöhtem Trockengehalt

**0 039 400**

auftreten können, wird dadurch begegnet, daß die Erhöhung nur im Latex-Anteil bei gleichbleibender Harzmenge vorgenommen wird. Diese Maßnahme führt zu einer großen Verarbeitungssicherheit durch ausreichende Topfzeiten.

Zur Imprägnierung werden Mischungen folgender Zusammensetzung verwendet :

| | | Gewichtsteile | |
|---|---|---|---|
| | | flüssig | fest |
| a) | Vinylpyridin-Copoly-merisat-Latex 40 %ig wäßrig | 250-900 | 100-360 |
| | Wasser | 60-0 | — |
| | Farbstoff | x | x |
| b) | Resorcin-Formaldehyd-Harz, 40 %ig wäßrig | 50 | 20 |
| | Wasser | 250 | — |
| | Formaldehyd 30 %ig wäßrig | 20 | 6 |

Der Trockengehalt der Mischung beträgt etwa 20-30 %.

Die Mischungsbestandteile (a) und (b) werden separat vorgemischt und dann (b) langsam in (a) eingerührt.

Nach der Imprägnierung wird getrocknet, wobei Trockentemperaturen von Raumtemperatur bis 120 °C geeignet sind. Die Trockenzeiten betragen etwa 10 min bis 2 h, wobei für niedrigere Trockentemperaturen längere Trockenzeiten benötigt werden. Die Trocknung ist beendet, wenn das Material nicht mehr klebrig ist. Im Anschluß an die Trocknung wird durch Nacherhitzen auskondensiert, wobei auf 130-180 °C während 1-10 min erhitzt wird. Als Vinylpyridin-Copolymerisat-Latex werden handelsübliche Produkte eingesetzt, beispielsweise PYRATEX J 1904[1] ; ebenso werden handelsübliche Resorcin-Formaldehyd-Harze verwendet, z. B. VULKADUR T[2]. Der Vinylpyridin-Copolymerisat-Latex kann andere Bestandteile, z. B. bis zu 50 % Styrol-Butadien-Kautschuk-Latex (SBR-Latex), enthalten.

Da die tatsächlichen mechanischen Beanspruchungen von Codends beim Fischen von vielen Einflußgrößen bestimmt wird, ist eine Nachstellung der wirklichen Verhältnisse für Tests sehr schwierig. So hat sich gezeigt, daß Prüfresultate von Scheuerversuchen sehr von der Art des Prüfapparates abhängen. Einen international akzeptierten und standardisierten Test gibt es nicht. Reproduzierbare Ergebnisse und zugleich eine starke mechanische Beanspruchung von Netzmaterial wird erfahrungsgemäß dann erreicht, wenn Prüflinge, z. B. Netzmaschen, in einem quaderförmigen Kasten der ungefähringen Abmessungen 30 × 20 × 20 cm, mit einem in Qualität und Menge definierten Gemisch aus Grobkies, Feinkies, Sand und Meerwasser beansprucht werden. Dieser sog. « Crimp-Tester » wird 3 h um eine zentrisch auf den Stirnseiten befestigte Achse gedreht. Nach Ablauf einer bestimmten Umdrehungszahl und gleichbleibender Geschwindigkeit im Crimp-Tester zeigen nicht erfindungsgemäß ausgerüstete Netzzwirne, Netzschnüre und Netzmaschen eine Einkürzung und ihr Aussehen hat sich zum Schlechten verändert. Die Einkürzung wird gemessen und im Vergleich zur Probe vor der Behandlung prozentual ausgedrückt, während das Aussehen der Prüflinge benotet wird. Die Ergebnisse des Testes sind davon abhängig, aus welchem Material (Polyamid, Polyäthylen, etc.) das Teststück besteht, ob es sich um gezwirntes oder geflochtenes Material handelt, und von der Konstruktion der Thermofixierung und dem Finish der Maschen.

Nachstehend sind einige Erfahrungswerte in Abhängigkeit von der Beanspruchung im Crimp-Testgerät aufgeführt (Maximal-Werte) :

Der auf Seite 5 beschriebene Crimp-Tester war mit

300 cm$^3$ Sand
300 cm$^3$ Feinkies (Körnung 3-12 mm)
350 cm$^3$ Grobkies (Körnung 12-30 mm)
1 500 cm$^3$ Wasser
und
45 g  Kochsalz

beschickt und wurde 3 h mit 60 Umdrehungen/min gedreht.

Unfixierte Polyamid Zwirne ohne Anti-Crimp-Ausrüstung              bis 35 % Einkürzung

[1] PYRATEX J 1904 ist ein Copolymerisat-Latex aus Butadien-Styrol und Vinylpyridin mit einem Gehalt von 13,5 % Vinylpyridin ; Hersteller : BAYER U. K. Ltd., Latex Production Division, Bromsgrove.

[2] VULKADUR T ist ein Produkt der BAYER AG, Leverkusen.

3

0 039 400

Unfixierte Polyamid-Flechtschnüre ohne Anti-Crimp-Ausrüstung     bis 18 % Einkürzung

Sattdampffixierte Polyamid-Zwirne ohne Anti-Crimp-Ausrüstung     bis 20 % Einkürzung
Sattdampffixierte Polyamid-Flechtschnüre ohne Anti-Crimp-Ausrüstung     bis 12 % Einkürzung

Beispiel

Codend mit doppelten, geflochtenen Maschenschenkeln (1 Schenkel aus Perlon-Filamentgarn 1880 dtex/4/16) unter Nichtzulassung von Schrumpf wird im Autoklaven nach 10 minütigem Vakuum 15 Minuten lang bei 130 °C sattdampffixiert. Nach diesem Prozeß und nachdem das Netz auf der Spannvorrichtung außerhalb des Autoklavs ausreichend abgekühlt ist, wird es von dieser abgenommen und 10 min in einer Imprägnierflotte, bestehend aus

700 Gew.-Teilen Pyratex J 1904, 40 %ig
1 Gew.-Teil eines Schwarzpigmentes
50 Gew.-Teilen Vulkadur T, 40 %ig
250 Gew.-Teilen Wasser
20 Gew.-Teilen Formaldehyd, 30 %ig,

behandelt, anschließend heißluftgetrockent und 5-10 min in 150 °C heißer Luft kondensiert. Der Feststoff-Auftrag beträg danach 14 %.

Die Maschengröße dieses Codends beträgt in nassem Zustand 120 mm. Nach 3 stündiger Beanspruchung im Crimp-Tester bleibt die Maschengröße naß bei 120 mm. Es ist keinerlei mechanischer Verschleiß an den Netzmaschen feststellbar. Die Maschengrößen wurden jeweils mit dem ICES-Meter gemessen (Spring loaded mesh gauge of the International Council for the Exploration of the Sea).

Bei Netzsteerten, hergestellt aus gezwirntem Perlon-Filamentgarn, ergeben sich unter gleicher Behandlung Mascheneinkürzungen von ca. 0-2 %. Demnach ist es lediglich erforderlich, bei solchen Netzen die Maschen um nur 2 % größer vorzugeben.

Auch das Ausrüsten von unfixierten Netz-Steerten ist mit der erfindungsgemäßen Anti-Crimp-Ausrüstung grundsätzlich mit gleich guten Ergebnissen möglich. In diesem Fall sind allerdings folgende Fakten zu berücksichtigen :

a) Wegen der fehlenden Thermofixierung und des gleichzeitigen Spannens sind die Netzknoten nicht fest zusammengezogen, was die Maschengröße beeinflußt und durch entsprechende vorherige Zugabe von Material kompensiert werden muß ;

b) die Maschengröße des unfixierten Netzes werden sich infolge des Kaltwasser-Schrumpfes und des Heißluft-Schrumpfes des Polyamidmaterials (verursacht durch das Wasser im Ausrüstungsmaterial bzw. durch den Trockenprozeß und den Kondensationsprozeß) entsprechend verkleinern. Auch dies ist durch entsprechende vorherige Zugabe von Material zu berücksichtigen.

Alle Übergänge von nicht ausreichend fixiertem Material von thermofixiertem bis nicht-thermofixiertem Material können entsprechend behandelt werden.

## Ansprüche

1. Verfahren zum Ausrüsten von Fischnetzen, insbesondere Fischnetz-Steerten, durch Imprägnierung mit einer Ausrüstung die aus einer Mischung aus einem Vinylpyridin-Copolymerisat-Latex, einem Formaldehyd-Harz-Vorkondensat, Formaldehyd, Wasser und gegebenenfalls Farbstoff besteht Trocknung der imprägnierten Netze und anschließende Wärmebehandlung bei 130-180 °C.

2. Verfahren nach Anspruch 1, dadurch gekennzeichnet, daß die Fischnetze aus gezwirnten oder geflochtenen synthetischen Filamentgarnen bestehen.

3. Verfahren nach Anspruch 1, dadurch gekennzeichnet, daß die Fischnetze aus gezwirnten oder geflochtenen synthetischen Polyamid-Filamentgarnen bestehen.

4. Verfahren nach Anspruch 1, dadurch gekennzeichnet, daß als Formaldehyd-Harz-Vorkondensat ein vorkondensiertes Resorcin-Formaldehyd-Harz verwendet wird.

5. Verfahren nach Anspruch 1, dadurch gekennzeichnet, daß man zur Imprägnierung eine Mischung aus 250 bis 900 Gew.-Teilen Vinylpyridin-Copolymerisat-Latex, 40 %ig, wäßrig, 250 bis 310 Gew.-Teilen Wasser, 50 Gew.-Teilen Resorcin-Formaldehyd-Harz, 40 %ig, wäßrig und 20 Gew.-Teilen Formaldehyd, 30 %ig, wäßrig, einsetzt.

6. Verfahren nach Anspruch 1, dadurch gekennzeichnet, daß der Vinylpyridin-Copolymerisat-Latex bis zu 50 % SBR-Latex enthalten kann.

7. Verfahren nach Anspruch 1, dadurch gekennzeichnet, daß der Trockensubstanz-Auftrag 5 bis 20 Gew.-%, bezogen auf das Gewicht des trocknen, nicht ausgerüsteten Netztuches, beträgt.

8. Verfahren nach Anspruch 1, dadurch gekennzeichnet, daß die Trockenzeit 10 min bis 2 h und die Kondensationszeit 1 bis 10 min beträgt.

4

**Claims**

1. A process for finishing fishing nets, characterised in that the fishing nets, particularly net ends, are impregnated with a finish consisting of a mixture of a vinyl pyridine copolymer latex, a formaldehyde resin precondensate, formaldehyde, water and, optionally, a dye and the nets thus impregnated are dried and subsequently heat-treated at 130 to 180 °C.

2. A process as claimed in Claim 1, characterised in that the fishing nets consist of twisted or plaited synthetic filament yarns.

3. A process as claimed in Claim 1, characterised in that the fishing nets consist of twisted or plaited synthetic polyamide filament yarns.

4. A process as claimed in Claim 1, characterised in that a precondensed resorcinol-formaldehyde resin is used as the formaldehyde resin precondensate.

5. A process as claimed in Claim 1, characterised in that a mixture of from 250 to 900 parts by weight of a 40 % aqueous vinyl pyridine copolymer latex, from 250 to 310 parts by weight of water, 50 parts by weight of a 40 % aqueous resorcinolformaldehyde resin and 20 parts by weight of 30 % aqueous formaldehyde is used for impregnation.

6. A process as claimed in Claim 1, characterised in that the vinyl pyridine copolymer latex may contain up to 50 % of SBR-latex.

7. A process as claimed in Claim 1, characterised in that the solids applied in the coating amount to between 5 and 20 % by weight, based on the weight of the dry, nonfinished netting.

8. A process as claimed in Claim 1, characterised in that the drying time is between 10 mins. and 2 hours and the condensation time between 1 and 10 mins.

**Revendications**

1. Procédé d'apprêtage de filets de pêche, caractérisé en ce qu'on imprègne les filets de pêche, en particulier, les culs de filets de pêche, avec un apprêt constitué d'un mélange d'un latex d'un copolymère de vinylpyridine, d'un précondensat de résine de formaldéhyde, de formaldéhyde, d'eau et éventuellement d'une matière colorante, on sèche le filet imprégné, puis on le soumet à un traitement thermique à une température de 130 à 180 °C.

2. Procédé suivant la revendication 1, caractérisé en ce que les filets de pêche sont constitués de fils à filaments synthétiques retordus ou tressés.

3. Procédé suivant la revendication 1, caractérisé en ce que les filets de pêche sont constitués de fils à filaments synthétiques de polyamide retordus ou tressés.

4. Procédé suivant la revendication 1, caractérisé en ce que, comme précondensat de résine de formaldéhyde, on utilise une résine précondensée de résorcine/formaldéhyde.

5. Procédé suivant la revendication 1, caractérisé en ce que, pour l'imprégnation, on utilise un mélange de 250 à 900 parties en poids d'un latex de copolymère de vinylpyridine, aqueux à 40 %, de 250 à 310 parties en poids d'eau, de 50 parties en poids d'une résine de résorcine/formaldéhyde, aqueuse à 40 %, ainsi que de 20 parties en poids de formaldéhyde, aqueux à 30 %.

6. Procédé suivant la revendication 1, caractérisé en ce que le latex de copolymère de vinylpyridine peut contenir jusqu'à 50 % d'un latex « SBR » (caoutchouc de styrène/butadiène).

7. Procédé suivant la revendication 1, caractérisé en ce que les substances sèches sont appliquées en une quantité de 5 à 20 % en poids, calculé sur le poids de la toile pour filets sèche et non apprêtée.

8. Procédé suivant la revendication 1, caractérisé en ce que le temps de séchage est de 10 minutes à 2 heures, tandis que le temps de condensation est de 1 à 10 minutes.